# EUROPÄISCHE PATENTSCHRIFT

(11) **EP 2 718 999 B1**
(45) Veröffentlichungstag und Bekanntmachung des Hinweises auf die Patenterteilung: **19.07.2017**
(21) Anmeldenummer: 12727132.8
(22) Anmeldetag: 31.05.2012
(51) Int. Cl.: H01M 2/12, H01M 10/48, G01L 19/12, G01L 13/02

(54) **BATTERIESYSTEM UND KRAFTFAHRZEUG MIT DIESEM BATTERIESYSTEM SOWIE VERFAHREN ZUR ERMITTLUNG EINER ENTGASUNG EINER SPEICHERZELLE EINES BATTERIESYSTEMS**
BATTERY SYSTEM AND A MOTOR VEHICLE HAVING THIS BATTERY SYSTEM AS WELL AS A METHOD FOR DETERMINING DEGASSING OF A STORAGE CELL OF A BATTERY SYSTEM
SYSTÈME DE BATTERIE ET VÉHICULE AUTOMOBILE POURVU DE CE SYSTÈME DE BATTERIE AINSI QUE PROCÉDÉ POUR DÉTERMINER UN DÉGAZAGE D'UNE CELLULE ACCUMULATRICE D'UN SYSTÈME DE BATTERIE

(30) Priorität: 06.06.2011 DE 102011076993
(43) Veröffentlichungstag der Anmeldung: 16.04.2014
(73) Patentinhaber: SAMSUNG SDI CO., LTD., Yongin-si, Gyeonggi-do 446-577 (KR); Robert Bosch GmbH, 70442 Stuttgart (DE)
(72) Erfinder: KRIEG, Berengar, 70839 Gerlingen (DE)
(74) Vertreter: Bee, Joachim
(86) Internationale Anmeldenummer: PCT/EP2012/060280
(87) Internationale Veröffentlichungsnummer: WO 2012/168137

(56) Entgegenhaltungen:
- WO-A1-2008/054383
- JP-A- 2007 027 011
- JP-A- 2009 289 668
- US-B1- 6 359 458

## Beschreibung

Die vorliegende Erfindung betrifft ein Batteriesystem mit wenigstens zwei Speicherzellen und einem Entgasungssystem, ein Kraftfahrzeug mit diesem Batteriesystem sowie ein Verfahren zur Ermittlung einer Entgasung einer Speicherzelle des Batteriesystems.

### Stand der Technik

Es ist bekannt, Batteriesysteme aus mehreren Untereinheiten aufzubauen. Eine einzelne Untereinheit ist dabei wenigstens aus einer einzelnen Speicherzelle gebildet. Eine einzelne Untereinheit kann auch mehrere zu einem Batteriemodul zusammengefasste Speicherzellen oder mehrere derartige Batteriemodule aufweisen. Demnach besteht ein Batteriesystem aus mindestens zwei miteinander verschalteten Speicherzellen.

Speicherzellen, beispielsweise Lithium-Ionen-Zellen, benötigen eine Entgasungsöffnung, da bestimmte Betriebszustände zu einem Überdruck in der Zelle führen können. Die unter Druck stehenden Gase müssen entweichen können. Dazu sind sogenannte Entgasungssysteme in Batteriesystemen bekannt, welche entstehende Gase der Speicherzellen aufnehmen und ableiten.

So geht aus der DE 10 2008 043784 ein Batteriemodul mit einem Gehäuse hervor, in dem wenigstens eine Speicherzelle mit einem Entgasungsventil angeordnet ist. Zur Aufnahme von aus der Speicherzelle austretenden Stoffen weist das Batteriemodul fluidleitende Entgasungskanäle auf.

Ferner ist aus der JP 2007027011 A ein Batteriesystem bekannt, wobei das Batteriesystem wenigstens zwei Speicherzellen und ein mit den Speicherzellen fluidleitend verbundenes Entgasungssystem aufweist. Dabei umfasst das Batteriesystem wenigstens einen im Entgasungssystem angeordneten Signalgeber.

### Offenbarung der Erfindung

Die Erfindung wird durch die unabhängigen Ansprüche 1 und 8 definiert.

Erfingdungsgemäß wird ein Batteriesystem mit wenigstens zwei Speicherzellen und einem mit den Speicherzellen fluidleitend verbundenen Entgasungssystem zur Verfügung gestellt, welches wenigstens einen im Entgasungssystem angeordneten Signalgeber und eine Signale von wenigstens einem Signalgeber auswertende Auswerteeinheit umfasst. Der wenigstens eine Signalgeber ist dabei derart ausgebildet, bei einem vordefinierten Volumenstrom am Signalgeber oder einem damit einhergehenden vordefinierten Druckunterschied vor und hinter dem Signalgeber seinen Signalzustand zu wechseln. Bevorzugt sind dabei als Speicherzellen Lithium-Ionen-Zellen.

Hiermit ist vorteilhaft eine unmittelbare Erkennung einer Entgasung einer Speicherzelle des Batteriesystems ermöglicht, schon bevor veränderte Leistungsdaten der Speicherzelle eine Beschädigung erkennen lassen. Damit kann vorteilhaft weiterer Schaden an benachbarten Speichezellen vermieden werden.

In einer bevorzugten Ausgestaltung des erfindungsgemäßen Batteriesystems ist vorgesehen, dass der Signalgeber einen auf einer Membran aufgebrachten Kontaktfaden aufweist und die Membran mitsamt dem Kontaktfaden bei dem vordefinierten Druckunterschied bzw. dem vordefinierten Volumenstrom zerreißbar und somit einen Stromkreis zur Auswerteeinheit unterbrechbar ausgebildet ist.

Hiermit ist vorteilhaft eine besonders einfache und dadurch kostengünstige Variante eines Signalgebers bereitgestellt, die ohne besondere Mehrkosten vielfach in dem Batteriesystem verbaut werden kann. Dadurch, dass bei dieser Ausgestaltungsvariante im Normalzustand ständig ein Signal des Signalgebers an der Auswerteeinheit anliegt, welches erst durch einen Störfall unterbrochen wird, ist eine permanente Überwachung des Druckes im Entgasungssystem ermöglicht.

In einer weiteren bevorzugten Ausgestaltung des erfindungsgemäßen Batteriesystems ist vorgesehen, dass der Signalgeber einen mit einer Federkraft beaufschlagten Kontaktarm und einen Kontaktanschlag aufweist, wobei der Kontaktarm bei dem vordefinierten Druckunterschied bzw. dem vordefinierten Volumenstrom gegen den Kontaktanschlag klappbar und somit einen Stromkreis zur Auswerteeinheit schließbar ausgebildet ist.

Hiermit ist vorteilhaft ein reversibler Signalgeber bereitgestellt. Dadurch, dass bei dieser Ausgestaltungsvariante lediglich im Störfall ein Signal an der Auswerteeinheit anliegt, ist eine energiearme Überwachung des Druckes im Entgasungssystem ermöglicht. Erfindungsgemäß ist vorgesehen, dass das Batteriesystem mehrere wenigstens zwei Speicherzellen aufweisende Batteriemodule umfasst und das Batteriesystem pro Batteriemodul einen Signalgeber aufweist.

Hiermit ist vorteilhaft das Batteriemodul, welches zumindest eine beschädigte Speicherzelle aufweist, zu identifizieren. Zusätzlich ist erfindungsgemäß vorgesehen, dass der Signalgeber jeweils in einem, eine Entgasungsleitung aufweisenden, Deckel des Batteriemoduls angeordnet ist.

Hiermit ist eine Montage des erfindungsgemäßen Batteriemoduls vorteilhaft erleichtert, da der Signalgeber zusammen mit dem Deckel als Baugruppe verbaut werden kann.

In einer weiteren bevorzugten Ausgestaltung des erfindungsgemäßen Batteriesystems ist vorgesehen, dass das Batteriesystem pro Speicherzelle einen Signalgeber aufweist.

Hiermit ist es vorteilhaft ermöglicht, einzelne beschädigte Speicherzellen zu erkennen.

In einer weiteren bevorzugten Ausgestaltung des erfindungsgemäßen Batteriesystems ist vorgesehen, dass der Signalgeber jeweils in einem Sicherheitsventil der Speicherzelle angeordnet ist.

Da insbesondere Lithium-Ionen-Speicherzellen dieses Sicherheitsventil aufweisen, welches bei erhöhtem Innendruck der Speicherzelle bricht, kann der Signalgeber hier in vorteilhafter Weise implementiert werden.

In einer weiteren bevorzugten Ausgestaltung des erfindungsgemäßen Batteriesystems ist vorgesehen, dass die Auswerteeinheit in einem Batteriemanagementsystem integriert ist.

Da insbesondere Lithium-Ionen-Batteriesysteme ein Batteriemanagementsystem aufweisen, ist eine Implementierung der Signalgeber vereinfacht. Eine gesonderte Überwachungseinheit für den Signalgeber ist damit nicht erforderlich.

Erfindungsgemäß wird weiterhin ein Kraftfahrzeug mit dem erfindungsgemäßen Batteriesystem in den zuvor genannten Ausgestaltungen bereitgestellt, wobei das Batteriesystem mit einem Antriebssystem des Kraftfahrzeugs verbunden ist.

Die Vorteile des erfindungsgemäßen Batteriesystems als Bauteil kommen so auch dem Kraftfahrzeug als Baugruppe zugute.

Erfindungsgemäß wird weiterhin ein Verfahren gemäß des unabhängigen Anspruchs 8 zur Ermittlung einer Entgasung einer Speicherzelle eines Batteriesystems mit einem Entgasungssystem bereitgestellt. Dabei werden mittels eines Signalgebers und einer Auswerteeinheit Drücke bzw. Volumenströme innerhalb des Entgasungssystems dadurch überwacht, dass ein Signalzustand des Signalgebers von der Auswerteeinheit ermittelt wird. Der Signalzustand des Signalgebers wird dabei mit einem vordefinierten, durch eine Entgasung einer Speicherzelle erzeugten Volumenstrom oder einem damit einhergehenden vordefinierten Druckunterschied vor und hinter dem Signalgeber verändert.

Mit dem erfindungsgemäßen Verfahren ist analog zum erfindungsgemäßen Batteriesystem eine schnelle und kostengünstige Erkennung von Entgasungen möglich.

Durch einen Strömungswiderstand des Signalgebers selbst wird vorteilhaft ein Druckunterschied durch den entstehenden Volumenstrom bei einer Entgasung einer Speicherzelle zwischen den Bereichen vor und hinter dem Signalgeber erzeugt, der dann vom Signalgeber erkannt wird.

Vorteilhafte Weiterbildungen der Erfindung sind in den Unteransprüchen angegeben und in der Beschreibung ausgeführt.

Der Begriff Batteriesystem schließt in dieser Anmeldung auch Batterien, Akkumulatoren, Akkumulatorbatterien, Akkumulatorsysteme, insbesondere Lithium-Ionen-Systeme oder Lithium-Polymer-Ionen-Systeme mit ein.

### Zeichnungen

Die vorliegende Erfindung wird anhand der Zeichnungen und der nachfolgenden Beschreibung näher erläutert. Es zeigen:
- Figur 1: den schematischen Grundaufbau eines erfindungsgemäßen Batteriesystems,
- Figur 2: eine Prinzipskizze eines irreversiblen Signalgebers des erfindungsgemäßen Batteriesystems,
- Figur 3: eine Prinzipskizze eines reversiblen Signalgebers des erfindungsgemäßen Batteriesystems,
- Figur 4: eine Speicherzelle eines erfindungsgemäßen Batteriesystems mit integriertem Signalgeber, und
- Figur 5: ein Deckel des erfindungsgemäßen Batteriesystems.

### Ausführungsformen der Erfindung

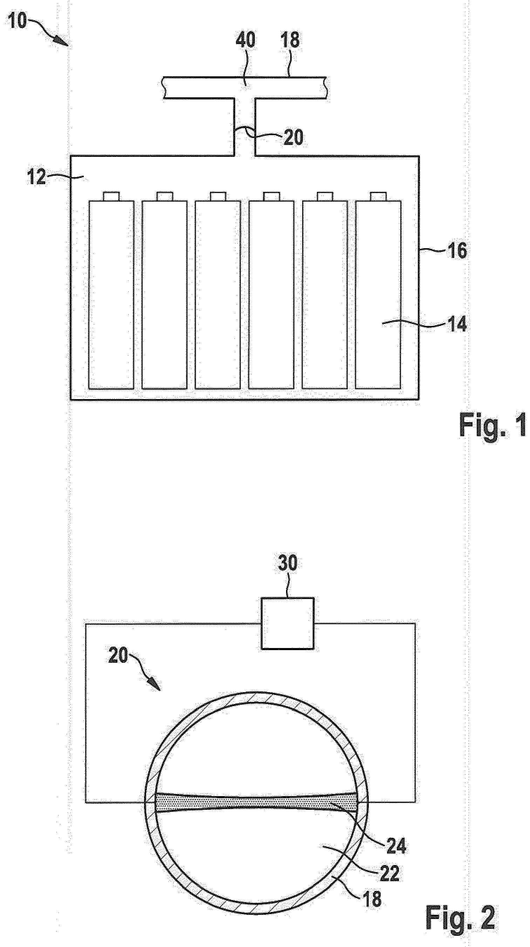

In Figur 1 ist beispielhaft und nicht beschränkend der schematische Grundaufbau eines erfindungsgemäßen Batteriesystems 10 gezeigt. Das Batteriesystem 10 weist erfindungsgemäß wenigstens zwei Speicherzellen 14 auf. Die Speicherzellen 14 sind bevorzugt so angeordnet, dass jeweils mehrere Speicherzellen 14 ein Batteriemodul 12 bilden. Das Batteriesystem 10 weist erfindungsgemäß mehrere derartige Batteriemodule 12 auf. In Figur 1 weist das Batteriemodul 12 beispielhaft sechs miteinander verschaltete Speicherzellen 14 auf. Ein Batteriemodul 12 kann dabei erfindungsgemäß auch mehr oder weniger als sechs Speicherzellen 14 aufweisen. Die Anzahl der Speicherzellen 14 richtet sich nach den geforderten Leistungs- und Energieparametern des Batteriemoduls 12 und den Leistungs- und Energieparametern der einzelnen Speicherzellen 14. Die Anzahl der Batteriemodule 12 im Batteriesystem 10 richtet sich entsprechend nach den geforderten Leistungs- und Energieparametern des gesamten Batteriesystems 10.

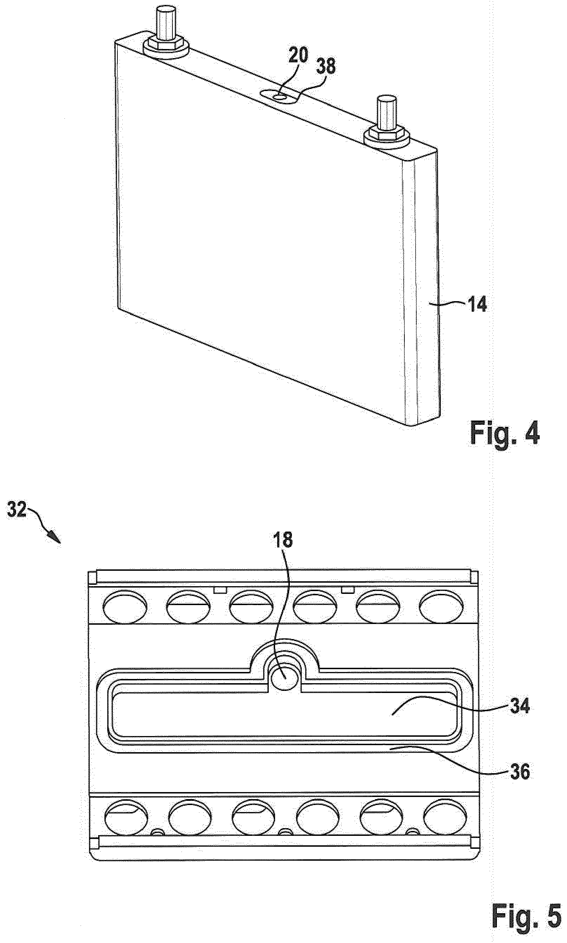

Die Speicherzellen 14 bestehen im Inneren aus elektrochemischen Elementen, die empfindlich auf äußere Einflüsse wie Luft oder Feuchtigkeit reagieren. Sie sind daher gut davor geschützt. Sollte es zu einer Fehlfunktion der Speicherzellen 14 kommen, beispielsweise durch einen Unfall oder durch Überladung, kann dies zu einer Überhitzung der Speicherzellen 14 oder zu einer Gasentwicklung und damit zu einem Druckanstieg innerhalb der Speicherzelle 14 führen. Damit eine geschädigte Speicherzelle 14 nicht platzt und folgend weitere Zellen beschädigen kann, weist jede Speicherzelle 14 ein Sicherheitsventil 38 auf, dargestellt in Figur 4. Dieses Sicherheitsventil 38 bricht bei erhöhtem Innendruck der Speicherzelle 14 und die Speicherzelle 14 kann entgasen.

Das Batteriesystem 10 weist für diesen Fall erfindungsgemäß ein Entgasungssystem 40 auf. Das Entgasungssystem 40 nimmt die aus den Speicherzellen 14 austretenden Gase auf und führt diese durch Entgasungsleitungen 18 gezielt ab. Das Entgasungssystem 40 ist an alle Speicherzellen 14 angeschlossen. Bevorzugt sind die Entgasungsleitungen 18 innerhalb einer Behausung 16 des Batteriesystems 10 angeordnet.

Kommt es zu einer Entgasung einer Speicherzelle 14, muss diese Entgasung nicht zwangsläufig sofort eine Auswirkung auf die Leistungswerte dieser Speicherzelle 14 haben. Spannung und Strom können bis zu mehreren Tagen Normalwerte aufweisen, bevor die Leistung dieser Speicherzelle 14 einbricht.

Eine Entgasung ist daher nicht allein durch eine Auswertung der Leistungsdaten der jeweiligen Speicherzelle 14 zu ermitteln.

Erfindungsgemäß ist daher innerhalb des Entgasungssystems 40 wenigstens ein Signalgeber 20 angeordnet. Der Signalgeber 20 ist erfindungsgemäß bevorzugt ein Drucksensor, der auf Druckunterschiede innerhalb des Entgasungssystems 40 reagiert. Der Signalgeber 20 ist bevorzugt in einer der Entgasungsleitungen 18 positioniert. Insbesondere kann der Signalgeber 20 auch in dem Sicherheitsventil 38 der Speicherzelle 14 implementiert sein, gezeigt in Figur 4. Alternativ bzw. in Kombination kann der Sensor auch auf Überschreiten eines minimalen Volumenstroms im Entgasungssystem detektieren.

Erfindungsgemäß ist bevorzugt wenigstens ein Signalgeber 20 pro Batteriemodul 12 vorgesehen, um den Druck in jedem einzelnen der Batteriemodule 12 des Batteriesystems 10 detektieren zu können oder den Volumenstrom aus jedem einzelnen Batteriemodul in die Entgasungsleitung. In besonders bevorzugter Ausgestaltung ist jede der Speicherzellen 14 mit einem Signalgeber 20 ausgestattet, um den Abbau von Überdruck in jeder einzelnen der Speicherzellen 14 des Batteriesystems 10 detektieren zu können.

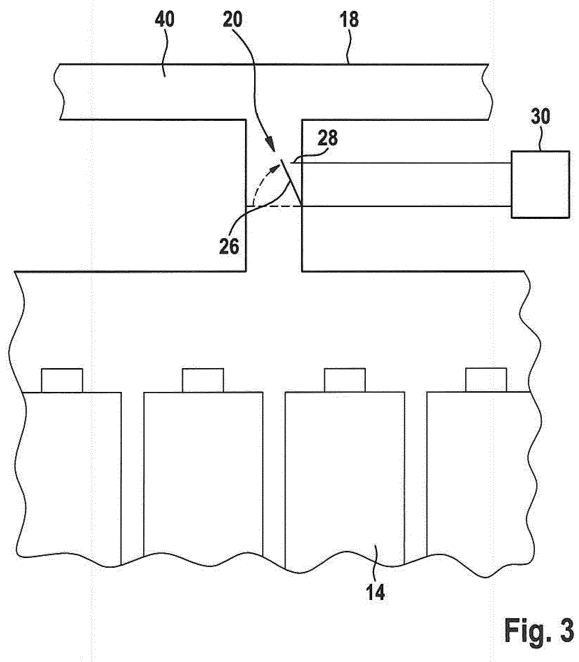

Der Signalgeber 20 informiert über das Eintreten eines bestimmten Druckunterschieds innerhalb des Entgasungssystems 40 und/oder über das Überschreiten eines bestimmten Volumenstromes, ausgelöst durch die Entgasung einer Speicherzelle 14. Dazu ändert der Signalgeber 20 seinen Signalzustand von einem ersten Signalzustand in einen zweiten Signalzustand. Dabei können der erste Signalzustand ein andauerndes Signal und der zweite Signalzustand eine Unterbrechung dieses Signals sein - gemäß der Ausführung in Figur 2 - oder im ersten Signalzustand wird kein Signal und im zweiten Signalzustand ein Signal erzeugt - gemäß der Ausführung in Figur 3. Der Signalgeber 20 schließt also entweder einen Signalpfad oder öffnet ihn. Dies kann reversibel oder auch irreversibel geschehen. Dadurch kann sichergestellt werden, dass das Batteriesystem 10 nicht weiter verwendet wird und es zu keinen weiteren Schäden kommt. Alternativ kann die Information genutzt werden, ein baldiges Ausfallen des Batteriesystems anzukündigen und gegebenenfalls Ersatzreaktionen zu aktivieren.

In Figur 2 ist dazu beispielhaft und nicht beschränkend eine schematische Darstellung eines irreversiblen Signalgebers 20 des erfindungsgemäßen Batteriesystems 10 gezeigt. In dieser Variante ist der Signalgeber 20 als Einwegbauteil beziehungsweise Opferbauteil ausgeführt.

Die in Figur 2 gezeigte Ausgestaltung des Signalgebers 20 weist eine Membran 22 auf, die den lichten Querschnitt der Entgasungsleitung 18 bedeckt, bevorzugt den gesamten lichten Querschnitt. Auf der Membran 22 ist ein elektrisch leitender Kontaktfaden 24 aufgebracht. Der Kontaktfaden 24 weist zwei Enden auf und verläuft bei einem runden lichten Querschnitt der Entgasungsleitung 18 bevorzugt als Sekante, insbesondere durch den Mittelpunkt des Querschnitts der Entgasungsleitung 18 und bei einem eckigen Querschnitt der Entgasungsleitung 18 bevorzugt von einer Seite zu einer dieser gegenüberliegenden Seite. Der Kontaktfaden 24 ist bevorzugt als dünne Schicht beziehungsweise Folie ausgeführt, welche bei einem Reißen der Membran 22 mit zerreißt.

Die Membran 22 ist dabei so ausgeführt, dass sie einem bestimmten Druckunterschied zwischen ihrer Vorder- und Rückseite widersteht. Bei einer Überschreitung dieses bestimmten Druckunterschieds reißen die Membran 22 und der Kontaktfaden 24.

Die Membran 22 kann dabei so ausgelegt sein, dass sie zu einem bestimmten Grad durchlässig für Druckausgleich aufgrund von Umwelteinflüssen ist, beispielsweise durch Aussparungen. Dem entstehenden Druck bei einer Entgasung einer der Speicherzellen 14, erzeugt durch einen minimalen Volumenstrom senkrecht zur Membran, der die Membran passieren muss, widersteht die Membran 22 nicht, sie wird zerstört.

Der Kontaktfaden 24 wird bei einer Zerstörung der Membran 22 immer mit zerstört. Dazu ist der Kontaktfaden 24 möglichst breit und flach ausgebildet. Der Kontaktfaden 24 kann zusätzlich Sollbruchstellen aufweisen, die eine Zerstörung bei einer definierten Belastung sicherstellen.

Der Signalgeber 20 ist mit einer Auswerteeinheit 30 verbunden. Die Auswerteeinheit 30 empfängt den Signalzustand des Signalgebers 20 und wertet diesen aus. Reißt der Kontaktfaden 24, so ändert sich der Signalzustand des Signalgebers 20 von einem ersten Signalzustand in einen zweiten Signalzustand. In der Ausführung gemäß Figur 2 wird dieser Wechsel durch eine Unterbrechung eines Stromkreises erreicht. Die Auswerteeinheit 30 erkennt dadurch ein Druckungleichgewicht bzw. das Überschreiten eines gewissen Volumenstroms im Entgasungssystem 40. Der Signalgeber 20 weist im Normalzustand den ersten Signalzustand auf und wechselt während eines Druckungleichgewichts in den zweiten Signalzustand. Ein Defekt einer Speicherzelle 14 wird dadurch sofort erkennbar. Erfindungsgemäß ist die Auswerteeinheit 30 bevorzugt in einem Batteriemanagementsystem integriert.

Der Kontaktfaden 24 ist erfindungsgemäß bevorzugt elektrisch leitend und über elektrische Leiter mit der Auswerteeinheit 30 verbunden. Als Signal kann so elektrischer Strom beziehungsweise elektrische Spannung dienen, deren Wert sich beim Zerreißen des Kontaktfaden 24 ändert, da ein mit der Auswerteeinheit 30 gebildeter Stromkreis unterbrochen wird.

In Figur 3 ist beispielhaft und nicht beschränkend alternativ zu der in Figur 2 gezeigten Variante des Signalgebers eine Prinzipskizze eines reversiblen Signalgebers 20 des erfindungsgemäßen Batteriesystems 10 gezeigt. Der Signalgeber 20 ist hier beispielhaft in einer Entgasungsleitung 18 des Entgasungssystems 40 des Batteriesystems 10 angeordnet.

Der reversible Signalgeber 20 weist in der Ausführung nach Figur 3 einen mit einer Federkraft belegten und schwenkbar gelagerten Kontaktarm 26 und einen Kontaktanschlag 28 auf. Bei einem durch die Geometrie und damit dem Strömungswiderstand definierten Volumenstrom übersteigt die auf den Kontaktarm 26 wirkende Kraft den Wert der Federkraft, und der Kontaktarm 26 schwenkt gegen den Kontaktanschlag 28.

Der Signalgeber 20 ist mit einer Auswerteeinheit 30 verbunden. Die Auswerteeinheit 30 empfängt den Signalzustand des Signalgebers 20 und wertet diesen aus. Klappt der Kontaktarm 26 an den Kontaktanschlag 28, so ändert sich der Signalzustand des Signalgebers 20 von einem ersten Signalzustand in einen zweiten Signalzustand. In der Ausführung gemäß Figur 3 wird dieser Wechsel durch eine Schließung eines Stromkreises erreicht. Die Auswerteeinheit 30 erkennt dadurch ein Druckungleichgewicht im Entgasungssystem 40. Ein Defekt einer Speicherzelle 14 wird dadurch sofort erkennbar. Erfindungsgemäß ist die Auswerteeinheit 30 auch hier bevorzugt in einem Batteriemanagementsystem integriert.

Der Kontaktanschlag 28 und der Kontaktarm 26 sind erfindungsgemäß bevorzugt elektrisch leitend und über elektrische Leiter mit der Auswerteeinheit 30 verbunden. Als Signal kann so elektrischer Strom beziehungsweise elektrische Spannung dienen, deren Wert sich beim Anklappen des Kontaktarms 26 an den Kontaktanschlag 28 ändert, da mit der Auswerteeinheit 30 ein Stromkreis gebildet wird.

Figur 4 zeigt beispielhaft und nicht beschränkend eine Speicherzelle 14 eines erfindungsgemäßen Batteriesystems 10 mit einem in einem Sicherheitsventil integrierten Signalgeber 20. Dieses Sicherheitsventil 38 ist Bestandteil des Entgasungssystems 40. Es bricht bei erhöhtem Innendruck der Speicherzelle 14, und die Speicherzelle 14 kann ins Entgasungssystem 40 entgasen. Durch die jeweilige Integration des Signalgebers 20 in das Sicherheitsventil 38 der Speicherzelle 14 kann erfindungsgemäß jede einzelne Speicherzelle 14 auf eine Entgasung überwacht werden. Der Signalgeber 20 ist auch in dieser Ausgestaltung mit einer hier nicht gezeigten Auswerteeinheit 30 verbunden.

Figur 4 zeigt beispielhaft eine prismatische Speicherzelle 14, deren Sicherheitsventil 38 an der Seite der Speicherzelle 14 angeordnet ist, an der auch die Anschlüsse der Speicherzelle 14 positioniert sind. Erfindungsgemäß sind auch andere Bauformen der Speicherzelle 14, beispielsweise zylindrisch denkbar.

Erfindungsgemäß weist bevorzugt wenigstens eines der Batteriemodule 12 des Batteriesystems 10 einen Deckel 32 als Teil der Behausung des Batteriemoduls 12 auf.

In Figur 5 ist beispielhaft und nicht beschränkend der Deckel 32 des erfindungsgemäßen Batteriesystems10 gezeigt. Der Deckel 32 ist dabei von seiner, den hier nicht gezeigten Speicherzellen 14 zugewandten, Seite gezeigt. In den Deckel 32 ist eine Vertiefung als Kollektor 34 zum Ansammeln der möglichen Entgasungen der Speicherzellen 14 eingelassen, an die eine der Entgasungsleitungen 18 des Entgasungssystems 40 fluidleitend angeschlossen ist. Der Kollektor 34 ist dabei so angeordnet, dass er den Sicherheitsventilen 38 der Speicherzellen 14 gegenüber sitzt, sodass Entgasungen aus den Sicherheitsventilen 38 direkt in den Kollektor 34 gelangen können. Die Sicherheitsventile 38 sind erfindungsgemäß Bestandteil des Entgasungssystems 40. Um den Kollektor 34 herum ist eine Dichtungsaussparung 36 zur Aufnahme einer Dichtung vorgesehen, welche den Kollektor 34 abdichtet.

## Patentansprüche

1. Batteriesystem (10) mit wenigstens zwei Speicherzellen (14) und einem mit den Speicherzellen (14) fluidleitend verbundenen Entgasungssystem (40), wobei das Batteriesystem (10) wenigstens einen im Entgasungssystem (40) angeordneten Signalgeber (20) und eine Signale vom wenigstens einen Signalgeber (20) auswertende Auswerteeinheit (30) umfasst, wobei der wenigstens eine Signalgeber (20) derart ausgebildet ist, bei einem vordefinierten Volumenstrom am Signalgeber (20) oder einem damit einhergehenden vordefinierten Druckunterschied vor und hinter dem Signalgeber (20) seinen Signalzustand zu wechseln **dadurch gekennzeichnet, dass** das Batteriesystem (10) mehrere wenigstens zwei Speicherzellen (14) aufweisende Batteriemodule (12) umfasst und das Batteriesystem (10) pro Batteriemodul (12) einen Signalgeber (20) aufweist und wobei der Signalgeber (20) jeweils in einem eine Entgasungsleitung (18) aufweisenden Deckel (32) des Batteriemoduls (12) angeordnet ist.

2. Batteriesystem (10) nach Anspruch 1, wobei der Signalgeber (20) einen auf einer Membran (22) aufgebrachten Kontaktfaden (24) aufweist und die Membran (22) mitsamt dem Kontaktfaden bei dem vordefinierten Druckunterschied bzw. dem vordefinierten Volumenstrom zerreißbar und somit einen Stromkreis zur Auswerteeinheit (30) unterbrechbar ausgebildet ist.

3. Batteriesystem (10) nach Anspruch 1, wobei der Signalgeber (20) einen mit einer Federkraft beaufschlagten Kontaktarm (26) und einen Kontaktanschlag (28) aufweist, wobei der Kontaktarm (26) bei dem vordefinierten Druckunterschied bzw. dem vordefinierten Volumenstrom gegen den Kontaktanschlag (28) klappbar und somit einen Stromkreis zur Auswerteeinheit (30) schließbar ausgebildet ist.

4. Batteriesystem (10) nach einem der Ansprüche 1 bis 3, wobei das Batteriesystem (10) pro Speicherzelle (14) einen Signalgeber (20) aufweist.

5. Batteriesystem (10) nach Anspruch 4, obei der Signalgeber (20) jeweils in einem Sicherheitsventil (38) der Speicherzelle (14) angeordnet ist.

6. Batteriesystem (10) nach einem der vorherigen Ansprüche, wobei die Auswerteeinheit (30) in einem Batteriemanagementsystem integriert ist.

7. Kraftfahrzeug mit einem Batteriesystem (10) nach einem der Ansprüche 1 bis 6, vobei das Batteriesystem (10) mit einem Antriebssystem des Kraftfahrzeugs verbunden ist.

8. Verfahren zur Ermittlung einer Entgasung einer Speicherzelle (14) eines Batteriesystems (10) nach einem der Ansprüche 1 bis 6 mit einem Entgasungssystem (40), **dadurch gekennzeichnet, dass** mittels eines Signalgebers (20) und einer Auswerteeinheit (30) Drücke bzw. Volumenströme innerhalb des Entgasungssystems (40) dadurch überwacht werden, dass ein Signalzustand des Signalgebers (20) von der Auswerteeinheit (30) ermittelt wird, wobei der Signalzustand des Signalgebers (20) mit einem vordefinierten, durch eine Entgasung einer Speicherzelle (14) erzeugten Volumenstrom oder einem damit einhergehenden vordefinierten Druckunterschied vor und hinter dem Signalgeber (20) verändert wird.

## Claims

1. Battery system (10) having at least two storage cells (14) and a degassing system (40) which is connected in a fluid-conducting fashion to the storage cells (14), wherein the battery system (10) comprises at least one signal generator (20), arranged in the degassing system (40), and an evaluation unit (30) which evaluates signals of at least one signal generator (20), wherein the at least one signal generator (20) is designed in such as way so as to change its signal state given a predefined volume flow at the signal generator (20) or an associated predefined difference in pressure upstream and downstream of the signal generator (20), **characterized in that** the battery system (10) comprises a plurality of battery modules (12) having at least two storage cells (14), and the battery system (10) has one signal generator (20) per battery module (12), and wherein the signal generator (20) is respectively arranged in a cover (32), having a degassing line (18), of the battery module (12).

2. Battery system (10) according to Claim 1, wherein the signal generator (20) has a contact thread (24) which is mounted on a diaphragm (22), and the diaphragm (22) together with the contact thread can be ruptured at the predefined pressure difference or the predefined volume flow, and therefore is designed to be able to disconnect a circuit from the evaluation unit (30).

3. Battery system (10) according to Claim 1, wherein the signal generator (20) has a contact arm (26) to which a spring force is applied, and a contact stop (28), wherein the contact arm (26) can be folded against the contact stop (28) given the predefined pressure difference and the predefined volume flow and thus a circuit is designed to be closable with respect to the evaluation unit (30).

4. Battery system (10) according to one of Claims 1 to 3, wherein the battery system (10) has one signal generator (20) per storage cell (14).

5. Battery system (10) according to Claim 4, wherein the signal generator (20) is arranged in each case in a safety valve (38) of the storage cell (14).

6. Battery system (10) according to one of the preceding claims, wherein the evaluation unit (30) is integrated into a battery management system.

7. Motor vehicle having a battery system (10) according to one of Claims 1 to 6, wherein the battery system (10) is connected to a drive system of the motor vehicle.

8. Method for determining degassing of a storage cell (14) of a battery system (10) according to one of Claims 1 to 6, having a degassing system (40), **characterized in that** pressures or volume flows within the degassing system (40) are monitored by means of a signal generator (20) and an evaluation unit (30) by virtue of the fact that a signal state of the signal generator (20) is determined by the evaluation unit (30), wherein the signal state of the signal generator (20) is changed with a predefined volume flow which is generated by degassing of a storage cell (14) or with an associated predefined pressure difference upstream and downstream of the signal generator (20).

## Revendications

1. Système de batterie (10) comportant au moins deux cellules accumulatrices (14) et un système de dégazage (40) en communication fluidique avec les cellules accumulatrices (14), dans lequel le système de batterie (10) comprend au moins un générateur de signal (20) disposés dans le système de dégazage (40) est une unité d'évaluation (30) évaluant des signaux provenant d'au moins un générateur de signal (20), dans lequel l'au moins un générateur de signal (20) est conçu de manière à changer son état de signal en présence d'un débit volumique prédéfini au niveau du générateur de signal (20) ou en présence d'une différence de pression prédéfinie qui en résulte avant ou après le générateur de signal (20), **caractérisé en ce que** le système de batterie (10) comprend plusieurs modules de batterie (12) comportant au moins deux cellules accumulatrices (14) et le système de batterie (10) comporte un générateur de signal (20) pour chaque module de batterie (12) et dans lequel le générateur de signal (20) est respectivement disposé dans un couvercle (32) du module de batterie (12), lequel couvercle comporte une conduite de dégazage (18).

2. Système de batterie (10) selon la revendication 1, dans lequel le générateur de signal (20) comporte un fil de contact (24) déposé sur une membrane (22) et la membrane (22) est conçue de manière à pouvoir être déchirée en association avec le fil et par conséquent, de manière à interrompre un circuit de courant vers l'unité d'évaluation (30) en présence de la différence de pression prédéfinie ou en présence du débit volumique prédéfini et par conséquent.

3. Système de batterie (10) selon la revendication 1, dans lequel le générateur de signal (20) comporte un bras de contact (26) soumis à une force de ressort et une butée de contact (28), dans lequel le bras de contact (26), en présence de la différence de pression prédéfinie ou en présence du débit volumique prédéfini, est conçu pour pouvoir être rabattu contre la butée de contact (28) et par conséquent, pour fermer un circuit de courant vers l'unité d'évaluation (30).

4. Système de batterie (10) selon l'une quelconque des revendications 1 à 3, dans lequel le système de batterie (10) comporte un générateur de signal (20) pour chaque cellule accumulatrice (14).

5. Système de batterie (10) selon la revendication 4, dans lequel le générateur de signal (20) est respectivement disposé dans une soupape de sécurité (38) de la cellule accumulatrice (14).

6. Système de batterie (10) selon l'une quelconque des revendications précédentes, dans lequel l'unité d'évaluation (30) est intégrée à un système de gestion de batterie.

7. Véhicule automobile comportant un système de batterie (10) selon l'une quelconque des revendications 1 à 6, dans lequel le système de batterie (10) est relié à un système d'entraînement du véhicule automobile.

8. Procédé pour déterminer un dégazage d'une cellule accumulatrice (14) d'un système de batterie (10) selon l'une quelconque des revendications 1 à 6, comportant un système de dégazage (40), **caractérisé en ce que** les pressions ou les débits volumiques à l'intérieur du système de dégazage (40) sont surveillés au moyen d'un générateur de signal (20) et d'une unité d'évaluation (30) de manière à ce qu'un état de signal du générateur de signal (20) soit déterminé par l'unité d'évaluation (30), dans lequel l'état de signal du générateur de signal (20) est modifié avec un débit volumique prédéfini généré par un dégazage d'une cellule accumulatrice (14) ou avec une différence de pression prédéfinie qui en résulte avant et après le générateur de signal (20).
